# EUROPÄISCHE PATENTSCHRIFT

(11) **EP 0 448 744 B1**
(45) Veröffentlichungstag und Bekanntmachung des Hinweises auf die Patenterteilung: **20.09.1995**
(21) Anmeldenummer: 90105711.7
(22) Anmeldetag: 26.03.1990
(51) Int. Cl.: H04L 7/033

(54) **Taktsynchronisationsschaltung**
Clock synchronization circuit
Circuit de synchronisation d'horloge

(43) Veröffentlichungstag der Anmeldung: 02.10.1991
(73) Patentinhaber: SIEMENS AKTIENGESELLSCHAFT, 80333 München (DE)
(72) Erfinder: Preller, Peter, Dipl.-Ing., D-8000 München 60 (DE); Grubert, Andreas Dipl.-Ing., D-8000 München 70 (DE)

(56) Entgegenhaltungen:
- DE-A- 3 332 939
- FR-A- 567 697
- US-A- 3 590 280
- US-A- 3 908 084
- PATENT ABSTRACTS OF JAPAN, Band 9, Nr. 49 (E-300)[1772], 2. März 1985; & JP-A-59 190 754 (OKI DENKI KOGYO K.K.) 29-10-1984
- PATENT ABSTRACTS OF JAPAN, Band 6, Nr. 119 (E-116)[997], 3. Juli 1982; & JP-A-57 48 841 (FUJITSU K.K.) 20-03-1982
- IEEE TRANSACTIONS ON COMPUTERS, Band C-25, Nr. 2, Februari 1976, Seiten 133-139; M. PECHOUCEK: "Anomalous response times of input synchronizers"
- PATENT ABSTRACTS OF JAPAN, vol. 10, no. 370 (E-463)[2427], 10. Dezember 1986; & JP-A-61 164 354 (MITSUBISHI ELECTRIC CORP.) 25-07-1986

## Beschreibung

Die Erfindung betrifft eine Schaltungsanordnung zur Synchronisation von impulsförmigen Signalen enthaltend eine Meßschaltung, durch die ein Flip-Flop in Abhängigkeit von der Phasenlage des impulsförmigen Signals zu einem Taktsignal taktgesteuert wird.

Eine Schaltungsanordnung zum Synchronisieren asynchroner impulsförmiger Signal ist z.B. aus Tietze/Schenk, 8. Auflage, Seiten 255 bis 256, insbesondere Abbildung 10.49 bekannt. Das asynchrone Signal wird hier dem Dateneingang eines taktgesteuerten Flip-Flops zugeführt. Am Takteingang des Flip-Flops liegt der Systemtakt, mit dem synchronisiert werden soll, an. Am Datenausgang des Flip-Flops kann man nun das synchronisierte Datensignal abgreifen. Das asynchrone Signal wird hierbei mit der steigenden und/oder der fallenden Flanke des Systemtakts bewertet. In digitalen Schaltungen wie z.B. hochintegrierten MOS-Schaltungen treten mitunter langsame Phasenverschiebungen zwischen den Systemtaktsignalen einer signalsendenden Schaltung und einer signalverarbeitenden Schaltung auf. Meist sind diese Verschiebungen auf thermische Effekte zurückzuführen. Befindet sich nun eine steigende oder fallende Flanke dese Datensignals am Eingang der signalverarbeitenden Schaltung im Bewertungszeitpunkt von dessen Systemtakt, so entsteht eine Bewertungsunsicherheit, die zu einem Jitter mit der Breite einer Taktperiode führt.

In der Veröffentlichung Patent Abstracts of Japan, Band 9, Nr. 49, 3/1985, JP-A-59-190754, ist eine Synchronisationsschaltung für impulsförmige Signale gezeigt, bei der ein Flip-Flop von einer Meßschaltung taktgesteuert wird. Der Meßschaltung werden das impulsförmige Signal und ein Taktsignal zugeführt. Beide Signale werden jeweils differenziert. Die differenzierten Signale werden in entsprechenden Schaltungseinrichtungen auf die zeitliche Überlappung ihrer Flanken überprüft. Daraus wird ein Signal abgeleitet, das in 180° Phasenbeziehung zum Taktsignal und in Phasenübereinstimmung mit dem impulsförmigen Signal steht. Durch dieses erzeugte Signal wird das Flip-Flop taktgesteuert.

In der Veröffentlichung Patent Abstracts of Japan, Band 6, Nr. 119, 7/1982, JP-A-57-48841 ist eine Taktauswahlschaltung zur Abtastung eines Datensignals bei der steigenden oder fallende Flanke eines Taktsignals gezeigt. Sofern mittels Phasenkomparatoren festgestellt worden ist, daß eine Flanke des Taktsignals in den Unsicherheitsbereich des Datensignals fällt, wird die jeweils andere Flanke des Taktsignals zum Abtasten des Datensignals verwendet.

Aufgabe der Erfindung ist es, eine andere Schaltungsanordnung zur Synchronisation von impulsförmigen Signalen anzugeben, die eine jitterfreie Synchronisation gewährleistet.

Diese Aufgabe wird gelöst durch eine Schaltungsanordnung mit den Merkmalen des Patentanspruchs 1. Alternativ wird die Aufgabe gelöst durch eine Schaltungsanordnung mit den Merkmalen des Patentanspruchs 2. Weiterbildungen sind Gegenstand der Unteransprüche.

Die Erfindung wird anhand von acht Figuren näher erläutert.
Es zeigen:
- FIG 1: eine Prinzipschaltungsanordnung gemäß der Erfindung,
- FIG 2: ein erstes Ausführungsbeispiel gemäß FIG 1,
- FIG 3: ein zweites Ausführungsbeispiel gemäß FIG 1,
- FIG 4: einen zeitlichen Verlauf von acht Signalen der in der FIG 2 gezeigten Schaltungsanordnung,
- FIG 5: einen zeitlichen Verlauf von elf Signalen der in der FIG 3 gezeigten Schaltungsanordnung,
- FIG 6: eine Realisierungsmöglichkeit der in FIG 3 gezeigten Schaltungsanordnung,
- FIG 7: eine Exclusiv-ODER-Schaltung zur Bewertung der steigenden Flanke,
- FIG 8: eine Exclusiv-ODER-Schaltung zur Bewertung der fallenden Flanke.

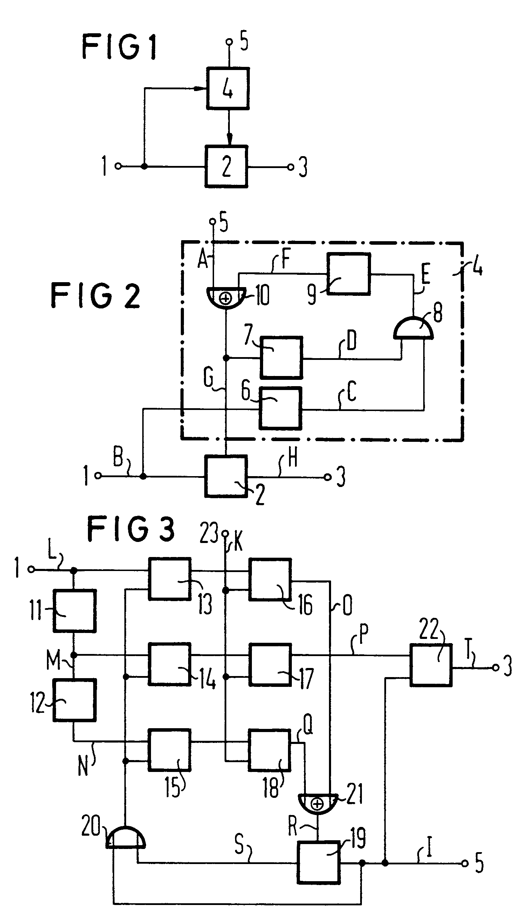

Das in FIG 1 gezeigte Prinzipschaltbild enthält ein taktgesteuertes Flip-Flop 2 sowie eine Meßschaltungsanordnung 4. Die Meßschaltungsanordnung 4 weist zwei Eingänge und einen Ausgang auf. Das zu synchronisierende impulsförmige Signal wird dem Dateneingang des Flip-Flops 2 und dem ersten Eingang der Meßschaltungsanordnung 4 über eine erste Eingangsklemme 1 zugeführt. Über eine zweite Eingangsklemme 5 wird der zweite Eingang der Meßschaltungsanordnung 4 mit dem Taktsignal beaufschlagt. Die Meßschaltung 4 erzeugt ein Ausgangssignal, daß dem Takteingang des taktgesteuerten Flip-Flops 2 zugeführt wird. Das synchronisierte Signal liegt am Datenausgang des Flip-Flops 2 an und ist an einer Ausgangsklemme 3 abgreifbar.

Zur Funktionserläuterung sei angenommen, daß das Datensignal eine Impulsfolge sei und daß die Flanken dieser Impulsfolge sich innerhalb der logischen "1". Bereiche des Taktsignales befinden. Weiterhin sei angenommen, daß die Flanken dieser Impulsfolge sich außerhalb des zu einem Jitter führenden Bereichs der bewertenden Flanken des Taktsignals befinden. Die Frequenz des Datensignals soll dabei klein gegenüber der Frequenz des Taktsignals sein. Sowohl eine Bewertung mit der steigenden wie auch mit der fallenden Flanke ergäbe in diesem Fall eine eindeutige Zuordnung des Signalzustandes zum Bewertungszeitpunkt. Geht man davon aus, daß sich nun die Frequenz des Taktsignals minimal erhöht, so würde die Bewertungsflanke des Taktsignals langsam in den Bereich der Flanke des zu synchronisierenden Signals rücken. Befindet sich die Flanke des zu synchronisierenden Signals nun innerhalb eines definierten Bereichs, so erkennt dies die Meßschaltung und schaltet die Bewertung auf ein zum bisherigen Taktsignal phasenverschobenes Taktsignal um. Dieses phasenverschobene Taktsignal kann z.B. ein zum bisherigen Taktsignal nicht überlappendes Taktsignal oder das invertierte Taktsignal sein. Auf diese Weise wird ein Jitter sicher vermieden.

Die erfindungsgemäße Schaltungsanordnung in FIG 2 zeigt wiederum ein taktgesteuertes Flip-Flop 2, dessen Dateneingang mit einer ersten Eingangsklemme 1 und dessen Datenausgang mit einer Ausgangsklemme 3 verschaltet ist. Die Meßschaltung 4 enthält einen ersten Differenzierer 6, dessen Eingang mit der Eingangsklemme 1 verbunden ist. Der Ausgang des ersten Differenzierers 6 wird dem ersten Eingang eines logischen UND-Gatters 8 zugeführt. Der Ausgang des logischen UND-Gatters 8 ist mit dem Eingang eines weiteren Flip-Flops 9 verschaltet. Das weitere Flip-Flop 9 ist nicht taktgesteuert und invertiert bei einem Impuls am Eingang des Flip-Flops 9 den logischen Zustand seines Ausgangs. Der Ausgang des Flip-Flops 9 ist mit dem ersten Eingang eines Exclusiv-ODER-Gatters 10 verbunden. Der zweite Eingang des Exclusiv-ODER- Gatters 10 wird mit dem Signal, das an einer zweiten Eingangsklemme 5 anliegt, beaufschlagt. Der Ausgang des Exclusiv-ODER-Gatters 10 ist zum einen mit dem Ausgang der Meßschaltung und damit mit dem Takteingang des ersten Flip-Flops 2 sowie mit dem Eingang eines zweiten Differenzierers 7 verbunden. Der Ausgang des zweiten Differenzierers 7 ist mit dem zweiten Eingang des UND-Gatters 8 verschaltet.

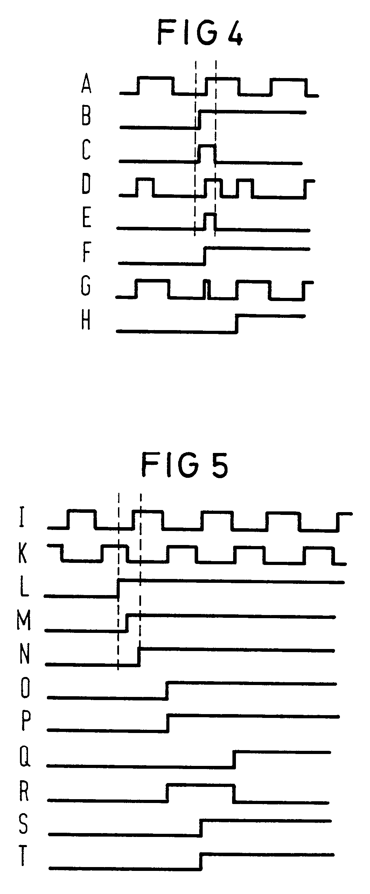

In Verbindung mit FIG 4, die den zeitlichen Verlauf von acht Signalen an den in FIG 2 mit A bis H gekennzeichneten Stellen aufzeigt, wird die Funktionsweise näher erläutert. An der Eingangsklemme 5 liegt das in FIG 4 mit A bezeichnete Taktsignal und an der Eingangsklemme 1 das um eine vielfach geringere Frequenz betragende impulsförmige Datensignal B an. Tritt am Eingang des Differenzierers 6 eine steigende Flanke auf, so bildet der Differenzierer 6 an seinem Ausgang einen in seiner Breite vordefinierten Impuls aus. Derselbe Vorgang geschieht mit den steigenden Flanken des synchronisierenden Taktsignals G durch den Differenzierer 7. Der zeitliche Verlauf der durch die Differenzierer 6, 7 gebildeten Impulse ist in FIG 4 mit C und D bezeichnet. Beide durch die Differenzierer 6, 7 gebildeten Signale werden über das UND-Gatter 8 logisch verknüpft. Am Ausgang des UND-Gatters 8 liegt ein logisches Signal E an, das angibt ob die steigende Flanke des Datensignals B innerhalb eines bestimmten Bereichs der steigenden Flanken des synchronisierenden Taktsignals G liegt. Die Größe dieses Bereiches wird durch die Differenzierer 6, 7 bestimmt und kann in einem weiten Bereich gewählt werden.

Liegt eine steigende Flanke des Datensignals B innerhalb eines vordefinierten Bereichs (in FIG 4 z.B.gestrichelt eingezeichnet), so wird am Ausgang des UND-Gatters 8 ein kurzer Impuls erzeugt. Dieser Impuls invertiert den logischen Zustand des Datenausgangs des zweiten Flip-Flops 9.In Abhängigkeit des logischen Zustandes von Flip-Flop 9 wird nun entweder das Taktsignal oder das invertierte Taktsignal dem Takteingang des taktgesteuerten Flip-Flops 2 zugeführt. Ein Exclusiv-ODER-Gatter 10 ermöglicht dies auf einfache Weise. Liegt am ersten Eingang des Exclusiv-ODER-Gatters 10 eine logische "0" an, so ist das Ausgangssignal des Exclusiv-ODER-Gatters gleich dem an der zweiten Eingangsklemme anliegenden Taktsignal. Liegt am ersten Eingang des Exclusiv-ODER-Gatters 10 eine logische "1" an, so ist das Ausgangssignal gleich dem an der zweiten Eingangsklemme invertierten Taktsignal. Sollte das synchronisierte Signal ausschließlich mit dem an der Eingangsklemme 5 anliegenden Taktsignal synchronisiert werden, so müßte das an der Ausgangsklemme 3 abgreifbare Signal über ein weiteres in FIG 2 nicht dargestelltes Flip-Flop, dessen Takteingang mit der Eingangsklemme 5 verbunden ist, geleitet werden.

Das in FIG 2 gezeigte Ausführungsbeispiel gemäß der Erfindung ermöglicht eine einfache Realisierung der in FIG 1 gezeigten Prinzipschaltungsanordnung, wobei nur ein Taktsignal notwendig ist. Außerdem ist durch die Verwendung nur eines taktgesteuerten Flip-Flops 2 eine kurze Signallaufzeit gewährleistet. Selbstverständlich ist auch eine erfindungsgemäße Realisierung mit entsprechenden Flip-Flops 2 und Differenzierern 6, 7 möglich, die eine Bewertung mit den fallenden Flanken des Taktsignals gewährleistet. Die in FIG 2 gezeigte Meßschaltungsanordnung vergleicht nur die Phasendifferenz zwischen den Bewertungsflanken und den steigenden Flanken des Datensignals. Dies ist meistens auch für die jitterfreie Synchronisation von Datensignalen ausreichend. Sollten auch die fallenden Flanken durch die Meßschaltung erfaßt werden, so müßte der Differenzierer 6 auch bei den fallenden Flanken einen entsprechenden Impuls definierter Länge bilden. Die dargestellte Schaltungsanordnung läßt sich außerdem leicht in MOS-Technologie herstellen.

Das in FIG 3 gezeigte zweite Ausführungsbeispiel enthält zwei in Reihe geschaltete Verzögerungsglieder 11, 12. Der Eingang des ersten Verzögerungsgliedes ist mit einer ersten Eingangsklemme 1 verbunden. Weiterhin enthält die Schaltungsanordnung nach FIG 3 zwei in Reihe geschaltete getaktete Flip-Flops 14, 17. Der Dateneingang des ersten Flip-Flops 14 ist mit dem Mittelabgriff der in Reihe geschalteten Verzögerungsglieder 11, 12 verschaltet. Der Datenausgang des ersten Flip-Flops 14 ist mit dem Dateneingang des zweiten Flip-Flops 17 verbunden. Des weiteren sind vier weitere Flip-Flops 13, 16, 15, 18 vorgesehen. Der Dateneingang des dritten Flip-Flops 13 wird mit dem an der ersten Eingangsklemme 1 anliegenden Signal beaufschlagt. Der Datenausgang des dritten Flip-Flops 13 ist mit dem Dateneingang des vierten Flip-Flops 16 und der Datenausgang des fünften Flip-Flops 15 mit dem Dateneingang des sechsten Flip-Flops 18 verbunden. Der Dateneingang des fünften Flip-Flops 15 ist mit dem Ausgang des zweiten Verzögerungsgliedes 12 verschaltet. Die Takteingänge des ersten, dritten und fünften Flip-Flops 14, 13, 15 werden mit dem Ausgangssignal eines ODER-Gatters 20 beaufschlagt. Die Takteingänge des zweiten, vierten und sechsten Flip-Flops 17, 16, 18 sind mit einer zweiten Eingangsklemme 23 verbunden. Die Datenausgänge des vierten und sechsten Flip-Flops 16, 18 werden den beiden Eingängen eines Exclusiv-ODER-Gatters 21 zugeführt. Der Ausgang des Exclusiv-ODER-Gatters 21 ist mit dem Dateneingang eines siebten Flip-Flops 19 verschaltet. Der Datenausgang des zweiten Flip-Flops 17 ist mit dem Dateneingang eines weiteren achten Flip-Flops 22 verbunden. Eine Ausgangsklemme 3 ist vorgesehen, der das Ausgangssignal des achten Flip-Flops 22 zugeführt wird. Eine dritte Eingangsklemme 5 ist vorgesehen, die mit dem Takteingang des achten Flip-Flops 22 und des siebten Flip-Flops 19 sowie mit dem ersten Eingang des ODER-Gatters 20 verbunden ist. Das Ausgangssignal des achten Flip-Flops 19 wird dem zweiten Eingang des ODER-Gatters 20 zugeführt.

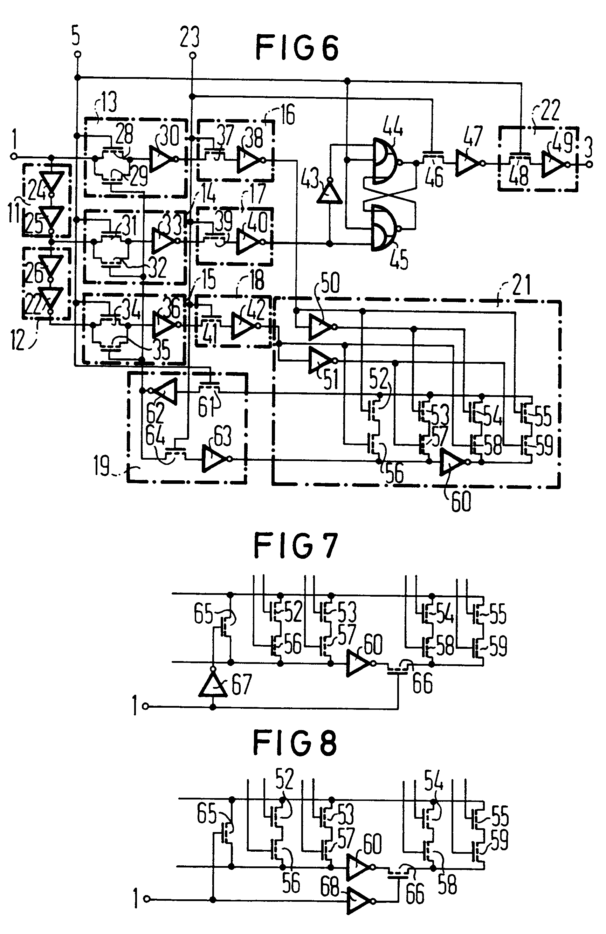

In Verbindung mit FIG 5, die den zeitlichen Verlauf von elf Signalen an den in FIG 3 mit I bis T gekennzeichneten Stellen aufzeigt, wird die Funktionsweise näher erläutert. An der Eingangsklemme 5 liegt ein erstes Taktsignal an. Ein dieses Taktsignal nicht überlappendes Taktsignal liegt an der zweiten Eingangsklemme 23 an. Beide Signale sind in FIG 5 mit I und K bezeichnet. Das taktgesteuerte Flip-Flop 2 aus FIG 1 wird hier durch die in Reihe geschalteten Flip-Flops 14, 17 gebildet. Die Meßschaltung 4 aus FIG 1 besteht hier aus den Flip-Flops 13, 16; 15, 18, der Exclusiv-ODER-Schaltung 21, dem Flip-Flop 19, dem ODER-Gatter 20 sowie den beiden Verzögerungsgliedern 11, 12. Alle Flip-Flops sind derartig ausgeführt, daß bei einer logischen "1" am Takteingang eines solchen Flip-Flops das Signal am Datenausgang gleich dem Signal am Dateneingang ist,und durch eine fallende Flanke am Takteingang wird das zu diesem Zeitpunkt am Dateneingang anliegende Signal am Datenausgang gespeichert.

Das Datensignal L gelangt über das erste Verzögerungsglied 11 zum Dateneingang des taktgesteuerten Flip-Flops 14. In FIG 5 ist dieses Signal mit M bezeichnet. Das Datensignal L und das zweimal verzögerte Datensignal N werden über die Flip-Flopstufen 13, 16; 15, 18 dem Exclusiv-ODER-Gatter 21 zugeführt. Ist der Ausgang des siebten Flip-Flops 19 und damit das Signal S logisch "0", so liegt an den Takteingängen der Flip-Flops 13, 14, 15 das an der zweiten Eingangsklemme 5 anliegende Taktsignal an. Befinden sich die Flanken des Datensignals M außerhalb eines vordefinierten Bereiches der bewertenden Flanken des Taktsignals I, so wird das Datensignal M über die drei Flip-Flopstufen 14, 17, 22 mit dem ersten Taktsignal I synchronisiert.

Die Signale O und Q zeigen an, ob sich eine Flanke des Datensignals M innerhalb eines bestimmten vordefinierten Bereiches der bewertenden Taktflanken des Taktsignals I befindet. Ist dies der Fall, so sind die Signale O und Q unterschiedlich und invertieren das Signal S am Ausgang des siebten Flip-Flops 19. Ist das Signal S logsich "1", so liegt am Takteingang der Flip-Flops 13, 14, 15 ebenfalls eine logische "1" an. Die Bewertung des Datensignals erfolgt nun mit dem zweiten an der Eingangsklemme 23 anliegenden Taktsignal K über das Flip-Flop 17, die Messung über die Flip-Flops 16 und 18. Das achte Flip-Flop 22 übernimmt das jitterfreie Datensignal P und synchronisiert es mit dem Taktsignal I. Dieses Flip-Flop 22 kann wie schon in der Beschreibung von FIG 2 erläutert in bestimmten Anwendungsfällen entfallen. Das so erhaltene synchrone Datensignal ist in FIG 5 mit T bezeichnet.

FIG 6 zeigt das in FIG 3 gezeigte Ausführungsbeispiel in MOS-Technologie. Die Zeitverzögerungsglieder 11, 12 sind durch jeweils zwei in Reihe geschaltete Inverter 24, 25; 26, 27 und die Flip-Flops 13, 14, 15 sind durch jeweils zwei Feldeffekttransistoren 28, 29; 31, 32; 34, 35 und einen Inverter 30; 33; 36 gebildet. Die Laststrecken der beiden Transistoren 28, 29; 31, 32; 34, 35 sind parallel geschaltet. Die miteinander verbundenen Drainanschlüsse der Transistoren 28, 29; 31, 32; 34, 35 sind mit dem Dateneingang der Flip-Flops 13, 14, 15, die miteinander verbundenen Sourceanschlüsse der Transistoren 28, 29; 31, 32; 34, 35 sind mit dem Eingang des Inverters 30; 33; 36 verbunden. Die Ausgänge der Inverter 30; 33; 36 sind mit den jeweiligen Ausgängen der Flip-Flops 13, 14, 15 verschaltet. Die Gateanschlüsse der ersten Transistoren 28; 31; 34 sind mit der Eingangsklemme 5 und die Gateanschlüsse der jeweils zweiten Transistoren 29; 32; 35 sind mit dem Datenausgang des Flip-Flops 19 verbunden. Die Flip-Flops 16, 17, 18, 22 werden jeweils durch einen Feldeffekttransistor 37; 39,; 41; 48 und einen Inverter 38; 40; 42; 49 gebildet. Die Drainanschlüsse der Transistoren 37; 39; 41; 48 sind hier wiederum mit dem Dateneingang der Flip-Flops 16, 17, 18, 22, die Sourceanschlüsse der Transistoren 37, 39, 41, 48 sind mit dem Eingang des Inverters 38, 40, 42, 49 und deren Ausgang mit dem Datenausgang der Flip-Flops 16, 17, 18, 22 verschaltet. Das Exclusiv-ODER-Gatter 21 enthält vier Transistorpaare 52...59, deren Laststrecken in Reihe geschaltet sind, und drei Inverter 50, 51, 60. Das hier gezeigte Exclusiv-ODER-Gatter 21 weist einen zusätzlichen Eingang auf. Das Ausgangssignal des Exclusiv-ODER-Gatters 21 wird den verbundenen Drainanschlüssen der ersten Transistoren 52...55 eines Transistorpaares entnommen. Der weitere Eingang ist mit den Sourceanschlüssen der zweiten Transistoren 56, 57 der ersten beiden Transistorpaare und mit dem Eingang des ersten Inverters 60 verschaltet. Der Ausgang des Inverters 60 ist jeweils mit den Sourceanschlüssen der zweiten Transistoren 58, 59 des dritten und vierten Transistorpaares verbunden. Der erste Dateneingang des Exclusiv-ODER-Gatters 21 ist sowohl mit den Gateanschlüssen der ersten Transistoren 52, 55 des ersten und vierten Transistorpaares als auch mit dem Eingang des zweiten Inverters 50 verschaltet. Der Ausgang des zweiten Inverters 50 ist mit den Gateanschlüssen der ersten Transistoren 53, 54 des zweiten und dritten Transistorpaares verbunden. In gleicher Weise ist der zweite Dateneingang jeweils mit den zweiten Transistoren 56, 58 des ersten und dritten Transistorpaares sowie über den dritten Inverter mit den Gateanschlüssen der zweiten Transistoren 57, 59 des zweiten und vierten Transistorpaares verschaltet. Das Flip-Flop 19 weist zwei in Reihe geschaltete Flip-Flops auf. Diese beiden Flip-Flops sind in gleicher Weise wie die Flip-Flops 16, 17, 18, 22 aus einem Feldeffekttransistor 61; 64 und einem Inverter 62; 63 aufgebaut. Der Drainanschluß des Transistors 61 ist mit dem Ausgangssignal des Exclusiv-ODER-Gatters beaufschlagt und sein Gateanschluß mit der ersten Eingangsklemme 5 verbunden. Der Gateanschluß des zweiten Transistors 64 ist mit der Eingangsklemme 23 und der Ausgang des Inverters 63 mit dem weiteren Eingang des Exclusiv-ODER-Gatters 21 verschaltet. Die Reihenschaltung der beiden Flip-Flops 61, 62; 63, 64 ist mit einem Mittelabgriff versehen, der jeweils mit den Gateanschlüssen der Transistoren 29, 32, 35 verbunden ist. Die Gatter 44, 45 und der Inverter 43 bilden ein D-Flip-Flop, dessen Eingangssignal dem Ausgang des Flip-Flops 17 und dessen Ausgangssignal einem durch den Transistor 46 und den Inverter 47 gebildeten Flip-Flop zugeführt wird. Der Dateneingang des Flip-Flops 22 wird mit dem Ausgangssignal des Inverters 47 beaufschlagt.

Die Funktionsweise entspricht der in FIG 3 beschriebenen. Die beiden zusätzlichen Flip-Flops 43...47 zwischen dem Datenausgang des Flip-Flops 17 und dem Dateneingang des Flip-Flops 22 sorgen für eine Verstärkung des durch die Flip-Flopstufen 14 und 17 synchronisierten Datensignals. Dies ist nötig, da die vorausgeschalteten Flip-Flop-Stufen 14, 17 jeweils nur durch einen Transistor und eine nachgeschaltete Inverterstufe gebildet werden. Die Eingangskapazität der Inverterstufe dient als Haltekapazität und ist sehr gering. Liegt an beiden Eingängen des Exclusiv-ODER-Gatters 21 das gleiche Signal an, so wird entweder über das erste Transistorpaar 52, 56 oder über das zweite Transistorpaar 53, 57 der weitere Eingang mit dem Ausgang des Exclusiv-ODER-Gatters 21 kurzgeschlossen.

Liegen an den Dateneingängen unterschiedliche Signale an, so wird das dritte oder vierte Transistorpaar leitend geschaltet, und somit wird das an dem weiteren Eingang anliegende Signal über den Inverter 60 invertiert und zum Ausgang geführt. Das Flip-Flop 19 speichert dieses Signal. Liegt am Ausgang des Flip-Flops 19 eine logische "1" an, so werden die Transistoren 29, 32, 35 leitend geschaltet. Dadurch wird die Synchronisation mit dem an der Eingangsklemme 5 anliegenden Taktsignal deaktiviert, die Synchronisation erfolgt nun über den an der Eingangsklemme 23 anliegenden Takt.

Die FIG 7 und 8 zeigen erweiterte Exclusiv-Oder-Gatter, die eine Synchronisation der steigenden oder fallenden Flanke des Eingangssignals ermöglichen. Das in FIG 7 gezeigte Exclusiv-ODER-Gatter ist mit zwei zusätzlichen Feldeffekttransistoren 65, 66 und einem Inverter 67 erweitert. Der Drainanschluß des ersten Transistors 65 ist mit dem Ausgang des Exclusiv-ODER-Gatters, der Sourceanschluß des Transistors 65 mit dem weiteren Eingang des Exclusiv-Oder-Gatters verbunden. Zwischen dem Ausgang des Inverters 60 und den Sourceanschlüssen der Transistoren 58 und 59 ist die Laststrecke des zweiten weiteren Transistors 66 geschaltet. Der Gateanschluß des ersten weiteren Transistors 65 ist mit dem Ausgang des zusätzlichen Inverters 67 verbunden. Der Eingang des zusätzlichen Inverters 67 und der Gateanschluß des zweiten weiteren Transistors 66 werden mit der dem an ersten Eingangsklemme 1 anliegenden Signal beaufschlagt.

Das in FIG 8 gezeigte erweiterte Exclusiv-ODER-Gatter entspricht dem in FIG 7 gezeigten mit dem Unterschied, daß der Gateanschluß des zweiten weiteren Transistors 66 mit dem Ausgang eines weiteren Inverters 68 und der Gateanschluß des weiteren Transistors 65 sowie der Eingang des weiteren Inverters 68 mit der ersten Eingangsklemme verbunden sind. Der Inverter 67 entfällt hier.

Bei einer logischen "0" an der Eingangsklemme 1 wird durch die Transistoren 65 und 66 das in FIG 7 gezeigte Exclusiv-ODER-Gatter deaktiviert. Dasselbse gilt für das in FIG 8 gezeigte Exclusiv-ODER-Gatter bei einer logischen "1" an der Eingangsklemme 1. Mit steigender Flanke an der Eingangsklemme 1 wird das in FIG 7 gezeigte Exclusiv-ODER-Gatter aktiviert. Die Funktion entspricht dann der in FIG 6 beschriebenen. Dasselbe gilt bei einer fallenden Flanke an der Eingangsklemme 1 bei dem in FIG 8 gezeigten Exclusiv-ODER-Gatter.

Die in den FIG 1 bis 3 sowie 6 bis 8 gezeigten Schaltungen lassen sich nach entsprechender Modifikation für jede elektronische Schaltung anwenden.

## Patentansprüche

1. Schaltungsanordnung zur Synchronisation von impulsförmigen Signalen mit den Merkmalen:
- die Schaltungsanordnung enthält ein taktgesteuertes Flip-Flop (2), einen Dateneingang (1), einen Datenausgang (3) und einen Takteingang,
- dem Dateneingang (1) des Flip-Flops (2) wird das zu synchronisierende impulsförmige Signal zugeführt, und am Datenausgang (3) des Flip-Flops (2) ist das synchronisierte Signal abgreifbar,
- eine Meßschaltung (4) ist vorgesehen, der das zu sychronisierende impulsförmige Signal zugeführt wird,
- der Meßschaltung (4) wird mindestens ein Taktsignal (5) zugeführt,
- die Meßschaltung (4) erzeugt ein Ausgangssignal, das entweder gleich dem der Meßschaltung (4) zugeführten Taktsignal (5) ist oder ein zum der Meßschaltung (4) zugeführten Taktsignal (5) phasenverschobenes Taktsignal ist,
- das von der Meßschaltung (4) erzeugte Ausgangssignal wird dem Takteingang des Flip-Flops (2) zugeführt,
- durch die Meßschaltung (4) wird die Phasendifferenz zwischen der zu bewertenden Flanke des impulsförmigen Signals und der bewertenden Flanke des Ausgangsignals der Meßschaltung (4) ermittelt,
- es sind Mittel vorgesehen, die bei Unterschreiten eines vordefinierten Wertes der Phasendifferenz das Ausgangssignal der Meßschaltung (4) auf das jeweilige andere Taktsignal umschalten,
- die Phasendifferenz wird derart ermittelt, daß das zu synchronisierende impulsförmige Signal einem ersten Differenzierer (6) zugeführt wird und daß das Ausgangssignal der Meßschaltung (4) einem weiteren Differenzierer (7) zugeführt wird,
**dadurch gekennzeichnet**,
- daß die beiden Ausgangssignale der Differenzierer (6, 7) einem logischen UND-Gatter (8) zugeführt werden,
- daß das Ausgangssignal des UND-Gatters (8) dem Dateneingang eines weiteren Flip-Flops (9) zugeführt wird,
- daß ein Exclusiv-ODER-Gatter (10) mit zwei Eingängen und einem Ausgang vorgesehen ist,
- daß dem ersten Eingang des Exclusiv-ODER-Gatters (10) das Taktsignal (5) zugeführt wird,
- daß dem zweiten Eingang des Exclusiv-ODER-Gatters (10) das Ausgangssignal des weiteren Flip-Flops (9) zugeführt wird und
- daß am Ausgang des Exclusiv-ODER-Gatters das Ausgangssignal der Meßschaltung (4) abgreifbar ist.

2. Schaltungsanordnung zur Synchronisation von impulsförmigen Signalen, mit den Merkmalen:
- die Schaltungsanordnung enthält ein taktgesteuertes Flip-Flop (2), einen Dateneingang (1), einen Datenausgang (3) und einen Takteingang,
- dem Dateneingang (1) des Flip-Flops (2) wird das zu synchronisierende impulsförmige Signal zugeführt, und am Datenausgang (3) des Flip-Flops (2) ist das synchronisierte Signal abgreifbar,
- eine Meßschaltung (4) ist vorgesehen, der das zu sychronisierende impulsförmige Signal zugeführt wird,
- der Meßschaltung (4) wird mindestens ein Taktsignal (5) zugeführt,
- die Meßschaltung (4) erzeugt ein Ausgangssignal, das entweder gleich dem der Meßschaltung (4) zugeführten Taktsignal (5) ist oder ein zum der Meßschaltung (4) zugeführten Taktsignal (5) phasenverschobenes Taktsignal ist,
- das von der Meßschaltung (4) erzeugte Ausgangssignal wird dem Takteingang des Flip-Flops (2) zugeführt,
- durch die Meßschaltung (4) wird die Phasendifferenz zwischen der zu bewertenden Flanke des impulsförmigen Signals und der bewertenden Flanke des Ausgangsignals der Meßschaltung (4) ermittelt,
- es sind Mittel vorgesehen, die bei Unterschreiten eines vordefinierten Wertes der Phasendifferenz das Ausgangssignal der Meßschaltung (4) auf das jeweilige andere Taktsignal umschalten,
**dadurch gekennzeichnet**, daß
- das zu synchronisierende Signal mittels zweier Verzögerungsglieder (11,12) ein erstes und ein zweites Mal verzögert wird,
- ein weiteres das erste Taktsignal (5) nicht überlappendes Taktsignal (23) der Meßschaltung zugeführt wird,
- das einmal verzögerte Signal dem Dateneingang des taktgesteuerten Flip-Flops zugeführt wird,
- das taktgesteuerte Flip-Flop (2) durch zwei in Reihe geschaltete weitere taktgesteuerte Flip-Flops (14, 17) gebildet wird,
- dem Takteingang des zweiten der weiteren zwei Flip-Flops (17) das zweite Taktsignal zugeführt wird,
- der Ausgang der Meßschaltung mit dem Takteingang des ersten Flip-Flops (14) verbunden ist,
- das unverzögerte und das zweimal verzögerte Signal der Meßschaltung zugeführt werden,
- die Meßschaltung fünf weitere taktgesteuerte Flip-Flops enthält,
- die Takteingänge des dritten und fünften Flip-Flops (13; 15) mit dem Ausgang der Meßschaltung und die Takteingänge der vierten und sechsten Flip-Flops (16; 18) mit dem zweiten Taktsignal (23) verbunden sind,
- dem Dateneingang des dritten Flip-Flops (13) das unverzögerte Signal und dem Dateneingang des fünften Flip-Flops (15) das zweimal verzögerte Signal zugeführt wird,
- der Datenausgang des dritten Flip-Flops (13) mit dem Dateneingang des vierten Flip-Flops (16) verbunden ist,
- der Datenausgang des fünften Flip-Flops (15) mit dem Dateneingang des sechsten Flip-Flops (18) verbunden ist,
- die Meßschaltung ein Exclusiv-ODER-Gatter (21) mit zwei Eingängen und einem Ausgang enthält,
- die beiden Datenausgangssignale des vierten und sechsten Flip-Flops (16; 18) dem ersten Eingang und dem zweiten Eingang des Exclusiv-ODER-Gatters (21) zugeführt werden,
- das Ausgangssignal des Exclusiv-ODER-Gatters (21) dem Eingang des siebten Flip-Flops (19) zugeführt wird, dessen Ausgangssignal bei einer logischen "1" am Eingang invertiert wird und bei einer logischen "0" erhalten bleibt,
- die Meßschaltung ein ODER-Gatter (20) enthält, dessen Ausgang mit dem Ausgang der Meßschaltung verbunden ist,
- der erste Eingang des ODER-Gatters (20) mit dem Ausgang des siebten Flip-Flops (19) verbunden ist,
- der zweite Eingang des ODER-Gatters (20) mit dem ersten Taktsignal (5) verbunden ist.

3. Schaltungsanordnung nach Anspruch 1 oder 2,
**dadurch gekennzeichnet**, daß ein weiteres Flip-Flop (22) vorgesehen ist, dessen Eingang mit dem Ausgang des taktgesteuerten Flip-Flops (2; 14, 17) verbunden ist und daß dem Takteingang des weiteren Flip-Flops (22) das Taktsignal (5) zugeführt wird und daß am Ausgang des weiteren Flip-Flops (22) das mit dem Taktsignal synchronisierte impulsförmige Signal abgreifbar ist.

4. Schaltungsanordnung nach einem der Ansprüche 1 bis 3,
**dadurch gekennzeichnet**, daß die Meßschaltung die Phasendifferenz zwischen der steigenden Flanke des impulsförmigen Signals und der bewertenden Flanke des Ausgangssignals ermittelt.

5. Schaltungsanordnung nach einem der Ansprüche 1 bis 4,
**dadurch gekennzeichnet**, daß die Meßschaltung die Phasendifferenz zwischen der fallenden Flanke des impulsförmigen Signals und der bewertenden Flanke des Ausgangssignals ermittelt.

## Claims

1. Circuit arrangement for the synchronization of pulse-shaped signals, having the features:
- the circuit arrangement contains a clock-controlled flip-flop (2), a data input (1), a data output (3) and a clock input,
- the pulse-shaped signal to be synchronized is fed to the data input (1) of the flip-flop (2), and the synchronized signal can be picked off at the data output (3) of the flip-flop (2),
- a measuring circuit (4) is provided, to which the pulse-shaped signal to be synchronized is fed,
- at least one clock signal (5) is fed to the measuring circuit (4),
- the measuring circuit (4) generates an output signal which is either equal to the clock signal (5) fed to the measuring circuit (4) or is a clock signal which is phase-shifted with respect to the clock signal (5) fed to the measuring circuit (4),
- the output signal generated by the measuring circuit (4) is fed to the clock input of the flip-flop (2),
- the phase difference between the edge to be weighted of the pulse-shaped signal and the weighting edge of the output signal of the measuring circuit (4) is determined by the measuring circuit (4),
- means are provided which switch over the output signal of the measuring circuit (4) to the respective other clock signal in the case of the phase difference falling below a predefined value,
- the phase difference is determined in such a way that the pulse-shaped signal to be synchronized is fed to a first differentiator (6) and the output signal of the measuring circuit (4) is fed to a further differentiator (7),
characterized
- in that the two output signals of the differentiators (6, 7) are fed to a logic AND gate (8),
- in that the output signal of the AND gate (8) is fed to the data input of a further flip-flop (9),
- in that an exclusive-OR gate (10) having two inputs and one output is provided,
- in that the clock signal (5) is fed to the first input of the exclusive-OR gate (10),
- in that the output signal of the further flip-flop (9) is fed to the second input of the exclusive-OR gate (10) and
- in that the output signal of the measuring circuit (4) can be picked off at the output of the exclusive-OR gate.

2. Circuit arrangement for the synchronization of pulse-shaped signals, having the features:
- the circuit arrangement contains a clock-controlled flip-flop (2), a data input (1), a data output (3) and a clock input,
- the pulse-shaped signal to be synchronized is fed to the data input (1) of the flip-flop (2), and the synchronized signal can be picked off at the data output (3) of the flip-flop (2),
- a measuring circuit (4) is provided, to which the pulse-shaped signal to be synchronized is fed,
- at least one clock signal (5) is fed to the measuring circuit (4),
- the measuring circuit (4) generates an output signal which is either equal to the clock signal (5) fed to the measuring circuit (4) or is a clock signal which is phase-shifted with respect to the clock signal (5) fed to the measuring circuit (4),
- the output signal generated by the measuring circuit (4) is fed to the clock input of the flip-flop (2),
- the phase difference between the edge to be weighted of the pulse-shaped signal and the weighting edge of the output signal of the measuring circuit (4) is determined by the measuring circuit (4),
- means are provided which switch over the output signal of the measuring circuit (4) to the respective other clock signal in the case of the phase difference falling below a predefined value,
characterized in that
- the signal to be synchronized is delayed a first and a second time by means of two delay elements (11, 12),
- a further clock signal (23), not overlapping the first clock signal (5), is fed to the measuring circuit,
- the once-delayed signal is fed to the data input of the clock-controlled flip-flop,
- the clock-controlled flip-flop (2) is formed by two further clock-controlled flip-flops (14, 17) connected in series,
- the second clock signal is fed to the clock input of the second of the further two flip-flops (17),
- the output of the measuring circuit is connected to the clock input of the first flip-flop (14),
- the undelayed and the twice-delayed signal are fed to the measuring circuit,
- the measuring circuit contains five further clock-controlled flip-flops,
- the clock inputs of the third and fifth flip-flops (13; 15) are connected to the output of the measuring circuit and the clock inputs of the fourth and sixth flip-flops (16; 18) are connected to the second clock signal (23),
- the undelayed signal is fed to the data input of the third flip-flop (13) and the twice-delayed signal is fed to the data input of the fifth flip-flop (15),
- the data output of the third flip-flop (13) is connected to the data input of the fourth flip-flop (16),
- the data output of the fifth flip-flop (15) is connected to the data input of the sixth flip-flop (18),
- the measuring circuit contains an exclusive-OR gate (21) having two inputs and one output,
- the two data output signals of the fourth and sixth flip-flops (16; 18) are fed to the first input and to the second input of the exclusive-OR gate (21),
- the output signal of the exclusive-OR gate (21) is fed to the input of the seventh flip-flop (19), whose output signal is inverted in the case of a logic "1" at the input and is maintained in the case of a logic "0",
- the measuring circuit contains an OR gate (20), whose output is connected to the output of the measuring circuit,
- the first input of the OR gate (20) is connected to the output of the seventh flip-flop (19),
- the second input of the OR gate (20) is connected to the first clock signal (5).

3. Circuit arrangement according to Claim 1 or 2, characterized in that a further flip-flop (22) is provided, whose input is connected to the output of the clock-controlled flip-flop (2; 14, 17) and in that the clock signal (5) is fed to the clock input of the further flip-flop (22) and in that the pulse-shaped signal synchronized with the clock signal can be picked off at the output of the further flip-flop (22).

4. Circuit arrangement according to one of Claims 1 to 3, characterized in that the measuring circuit determines the phase difference between the rising edge of the pulse-shaped signal and the weighting edge of the output signal.

5. Circuit arrangement according to one of Claims 1 to 4, characterized in that the measuring circuit determines the phase difference between the falling edge of the pulse-shaped signal and the weighting edge of the output signal.

## Revendications

1. Montage de synchronisation de signaux de forme impulsionnelle ayant les particularités suivantes :
- le montage comprend une bascule (2) bistable commandée par cadence, une entrée (1) de données, une sortie (3) de données et une entrée de cadence,
- le signal de forme impulsionnelle à synchroniser est relié à l'entrée (1) de données de la bascule (2) bistable et le signal synchronisé peut être prélevé à la sortie (3) de données de la bascule (2) bistable,
- il est prévu un circuit (4) de mesure, auquel le signal de forme impulsionnelle à synchroniser est envoyé,
- au moins un signal (5) de cadence est envoyé au circuit (4) de mesure,
- le circuit (4) de mesure produit un signal de sortie, qui est égal au signal (5) de cadence envoyé au circuit (4) de mesure ou qui est un signal de cadence déphasé par rapport au signal (5) de cadence envoyé au circuit (4) de mesure,
- le signal de sortie produit par le circuit (4) de mesure est envoyé à l'entrée de cadence de la bascule (2) bistable,
- la différence de phases entre le flanc à évaluer du signal de forme impulsionnelle et le flanc d'évaluation du signal de sortie du dispositif (4) de mesure est déterminée par le circuit (4) de mesure,
- on prévoit des moyens, qui, en cas de passage de la différence de phases sous une valeur prédéfinie, commute le signal de sortie du circuit (4) de mesure sur l'autre signal de cadence,
- la différence de phases est déterminée, de sorte que le signal de forme impulsionnelle à synchroniser soit envoyé à un premier différenciateur (6) et que le signal de sortie du circuit (4) de mesure soit envoyé à un autre différenciateur (7),
caractérisé en ce que
- les deux signaux de sortie des différenciateurs (6, 7) sont envoyés à une porte logique ET (8),
- le signal de sortie de la porte ET (8) est envoyé à l'entrée de données d'une autre bascule bistable (9),
- une porte OU exclusif (10) comportant deux entrées et une sortie est prévue,
- le signal (5) de cadence est envoyé à la première entrée de la porte OU-Exclusif (10),
- le signal de sortie de l'autre bascule bistable (9) est envoyé à la deuxième entrée de la porte OU exclusif (10) et
- le signal de sortie du circuit (4) de mesure peut être prélevé à la sortie de la porte OU-Exclusif.

2. Montage de synchronisation de signaux de forme impulsionnelle, ayant les particularités suivantes :
- le montage comprend une bascule (2) bistable commandée par cadence, une entrée (1) de données, une sortie (3) de données et une entrée de cadence,
- le signal de forme impulsionnelle à synchroniser est envoyé à l'entrée (1) de données de la bascule (2) bistable et le signal synchronisé peut être prélevé à la sortie (3) de données de la bascule (2) bistable,
- il est prévu un circuit (4) de mesure, auquel le signal de forme impulsionnelle à synchroniser est envoyé,
- au moins un signal (5) de cadence est envoyé au circuit (4) de mesure,
- le circuit (4) de mesure produit un signal de sortie, qui est égal au signal (5) de cadence envoyé au circuit (4) de mesure ou qui est un signal de cadence déphasé par rapport au signal (5) de cadence envoyé au circuit (4) de mesure,
- le signal de sortie produit par le circuit (4) de mesure est envoyé à l'entrée de cadence de la bascule (2) bistable,
- la différence de phases entre le flanc à évaluer du signal de forme impulsionnelle et le flanc d'évaluation du signal de sortie du circuit (4) de mesure est déterminée par le circuit (4) de mesure,
- il est prévu des moyens, qui, en cas de passage de la différence de phases sous une valeur prédéterminée, commute le signal de sortie du circuit (4) de mesure sur l'autre signal de cadence,
caractérisé en ce que
- le signal à synchroniser est retardé une première et une deuxième fois au moyen de deux éléments (11, 12) de retardement,
- un autre signal (23) de cadence ne se superposant pas au premier signal (5) de cadence est envoyé au circuit de mesure,
- le signal retardé une fois est envoyé à l'entrée de données de la bascule bistable commandée par cadence,
- la bascule (2) bistable commandée par cadence est formée de deux autres bascules (14, 17) bistables commandées par cadence et branchées en série,
- le deuxième signal de cadence est envoyé à l'entrée de cadence de la deuxième des deux autres bascules bistables (17),
- la sortie du circuit de mesure est reliée à l'entrée de cadence de la première bascule bistable (14),
- le signal non retardé et le signal retardé deux fois sont envoyés au circuit de mesure,
- le circuit de mesure comprend cinq autres bascules bistables commandées par cadence,
- les entrées de cadence des troisième et cinquième bascules bistables (13 ; 15) sont reliées à la sortie du circuit de mesure et les entrées de cadence des quatrième et sixième bascules bistables (16, 18) sont reliées au deuxième signal (23) de cadence,
- le signal non retardé est envoyé à l'entrée de données de la troisième bascule bistable (13) et le signal retardé deux fois est envoyé à l'entrée de données de la cinquième bascule bistable (15),
- la sortie de données de la troisième bascule bistable (13) est reliée à l'entrée de données de la quatrième bascule bistable (16),
- la sortie de données de la cinquième bascule bistable (15) est reliée à l'entrée de données de la sixième bascule bistable (18),
- le circuit de mesure comprend une porte OU exclusif (21) comportant deux entrées et une sortie,
- les deux signaux de sortie de données des quatrième et sixième bascules bistables (16, 18) sont envoyés à la première entrée et à la deuxième entrée de la porte OU-Exclusif (21),
- le signal de sortie de la porte (21) OU-Exclusif est envoyé à l'entrée de la septième bascule bistable (19), dont le signal de sortie est inversé, lorsqu'un "1" logique est présent à l'entrée, et reste le même pour un "0" logique,
- le circuit de mesure comprend une porte OU (20), dont la sortie est reliée à la sortie du circuit de mesure,
- la première entrée de la porte OU (20) est reliée à la sortie de la septième bascule bistable (19),
- la deuxième entrée de la porte OU (20) est reliée au premier signal (5) de cadence.

3. Montage suivant la revendication 1 ou 2, caractérisé en ce qu'il est prévu une autre bascule bistable (22), dont l'entrée est reliée à la sortie de la bascule bistable (2 ; 14, 17) commandée par cadence, le signal (5) de cadence est envoyé à l'entrée de cadence de l'autre bascule bistable (22) et le signal de forme impulsionnelle synchronisé avec le signal de cadence peut être prélevé à la sortie de l'autre bascule bistable (22).

4. Montage suivant l'une des revendications 1 à 3, caractérisé en ce que le circuit de mesure détermine la différence de phases entre le flanc montant du signal de forme impulsionnelle et le flanc d'évaluation du signal de sortie.

5. Montage suivant l'une des revendications 1 à 4, caractérisé en ce que le circuit de mesure détermine la différence de phases entre le flanc descendant du signal de forme impulsionnelle et le flanc d'évaluation du signal de sortie.
